# EUROPÄISCHE PATENTSCHRIFT

(11) **EP 2 380 727 B1**
(45) Veröffentlichungstag und Bekanntmachung des Hinweises auf die Patenterteilung: **08.05.2013**
(21) Anmeldenummer: 11163036.4
(22) Anmeldetag: 19.04.2011
(51) Int. Cl.: B29C 65/74, B29C 65/30, B65B 51/18, B65B 51/30, B65B 61/10, B26F 3/08, B26D 1/00, B26D 7/10

(54) **Widerstandsbeheiztes Trennschweißmesser**
Resistance-heated cutting and welding blade
Couteau de soudage de séparation chauffé par résistance

(30) Priorität: 21.04.2010 DE 102010018454
(43) Veröffentlichungstag der Anmeldung: 26.10.2011
(73) Patentinhaber: Beck Packautomaten GmbH & Co. KG, 72636 Frickenhausen (DE)
(72) Erfinder: Schumayer, Ulrich, 72622 Nürtingen (DE)
(74) Vertreter: Witte, Weller & Partner

(56) Entgegenhaltungen:
- DE-B3-102006 042 822
- DE-U1- 29 623 179
- DE-U1-202007 007 298

## Beschreibung

Die vorliegende Erfindung betrifft ein Trennschweißmesser zum Trennschweißen von aufeinanderliegenden Folienbereichen, mit zwei Anschlussabschnitten zum Widerstandsbeheizen des Trennschweißmessers, und mit einem Schneidbügel, der die Anschlussabschnitte miteinander verbindet und einen geraden Abschnitt sowie zwei gebogene Abschnitte aufweist. Des Weiteren betrifft die vorliegende Erfindung eine Längstrennschweißvorrichtung mit einem solchen Trennschweißmesser, wobei des Weiteren ein mit dem geraden Abschnitt verbundener Wärmekörper vorgesehen ist.

Ein derartiges Trennschweißmesser und eine derartige Längstrennschweißvorrichtung sind beispielsweise aus der Druckschrift DE 20 2007 007 298 U1 bekannt.

Trennschweißmesser werden seit langem in sog. Folienverpackungsmaschinen verwendet. Folienverpackungsmaschinen dienen dazu, Packgüter in eine Folienumverpackung einzuhüllen. Bei den Packgütern kann es sich um Konsumartikel wie beispielsweise Bücher oder CDs handeln, aber auch um Zeitschriften oder Textilien. Neben Banderoliermaschinen wird bei den Folienverpackungsmaschinen zwischen zwei verschiedenen Typen unterschieden. Zum einen existieren sogenannte Serienpackmaschinen und zum anderen sogenannte Formschultermaschinen.

Bei den Formschultermaschinen wird zunächst aus einer Folienbahn mittels einer Formschulter ein Halbschlauch gelegt, in den das Packgut einfährt. Mittels einer Quertrennschweißvorrichtung, die quer zu einer Transportrichtung des Packguts verläuft, wird der Halbschlauch vor und hinter dem Packgut verschweißt und durchtrennt. Mittels einer Längstrennschweißvorrichtung wird die offene Seite des Halbschlauches verschweißt und ein seitlicher Folienüberstand abgetrennt.

Bei den sog. Serienpackmaschinen werden eine obere und eine untere Folienbahn an das Packgut herangefahren und ebenfalls mittels einer Quertrennschweißvorrichtung und einer Längstrennschweißvorrichtung verschweißt und die seitlichen Folienüberstände abgetrennt. Bei den Serienpackmaschinen sind beide Längsseiten der Folienbahnen miteinander zu verschweißen und abzutrennen.

Während die Quertrennschweißvorrichtungen in der Regel nach Art einer Stanze ausgebildet sind, d.h. ein Oberstempel und ein Unterstempel werden zusammengefahren und durchtrennen die zwischen den Stempeln befindlichen Folienbahnen, handelt es sich bei den Längstrennschweißvorrichtungen um feststehende oder rotierende Messer, durch die die Folienbahnen hindurchgefördert werden.

Die Trennschweißmesser sind dabei beheizt, so dass neben dem Durchtrennen der Folienbahnen auch ein Anschmelzen der Folienbahnen und damit ein Verschweißen der Folienbahnen erfolgt. Die zum Verschweißen der Folienbahnen notwendigen Temperaturen sind dabei von dem Material der jeweiligen Folienbahn abhängig. Bei Polyethylenfolien liegt die Schweißtemperatur in etwa bei 165°C, bei Polyolefinfolien bei etwa 225°C, und bei Polypropylenfolien liegt sie bei etwa 205°C. Das Temperaturfenster, in dem ein qualitativ hochwertiges Verschweißen möglich ist, liegt bei etwa ± 5°C.

Entsprechend ist ein Trennschweißmesser einer solchen Längstrennschweißvorrichtung auf eine entsprechende Temperatur zu erwärmen. Zur Erwärmung der Trennschweißmesser sind verschiedene Arten von Erhitzungsvorgängen bekannt, wobei die Erwärmung mittels Heizpatronen auf der einen Seite und die Erwärmung mittels einer Widerstandsbeheizung auf der anderen Seite die häufigsten Formen darstellen.

Die Druckschrift DE 10 2008 017 863 A1 zeigt ein Trennschweißmesser, das zusammen mit einer Heizpatronenbeheizung verwendet werden kann. Das Trennschweißmesser weist eine an ihrem Bug nach oben gezogene Schneide auf, auf die die Folienbahnen auflaufen. Dieses Trennschweißmesser hat eine relativ große Dicke und Masse. Die Längserstreckung des Trennschweißmessers ist so gewählt, dass eine gewünschte Verschweißung erfolgt.

Derartige Trennschweißmesser nehmen in Folienverpackungsmaschinen einen relativ großen Bauraum ein. Des Weiteren ist die Beheizung mittels der Heizpatronen unter Umständen für einige Anwendungen zu träge. Dies hängt mit der großen Masse der Trennschweißmesser zusammen und zum anderen mit der relativ träge verlaufenden Wärmeübertragung. Des Weiteren erfolgt die Regelung der Beheizung lediglich durch Ein- und Ausschalten der Heizpatrone. Als Antwort erhält man auf diese Weise ein sinusförmiges Temperatursignal, das um die Zieltemperatur schwingt, diese aber nie erreicht.

Daher werden vermehrt widerstandsbeheizte Trennschweißmesser eingesetzt, bei denen die Eigenschaften des Trennschweißmessers als Ohmscher Leiter dazu genutzt werden, das Trennschweißmesser mittels eines durch das Trennschweißmesser fließenden Stroms zu erwärmen.

Ein derartiges Trennschweißmesser ist beispielsweise in der eingangs genannten Druckschrift DE 20 2007 007 298 U1 gezeigt.

Des Weiteren zeigt die Druckschrift DE 296 23 179 U1 einen elektrischen Widerstandsdraht mit einem kreisförmigen Querschnitt, der als Schneideinrichtung für eine Textilschneidemaschine vorgesehen ist, wobei die Schnittrichtung quer zu einer Transportrichtung des Flächenmaterials liegt.

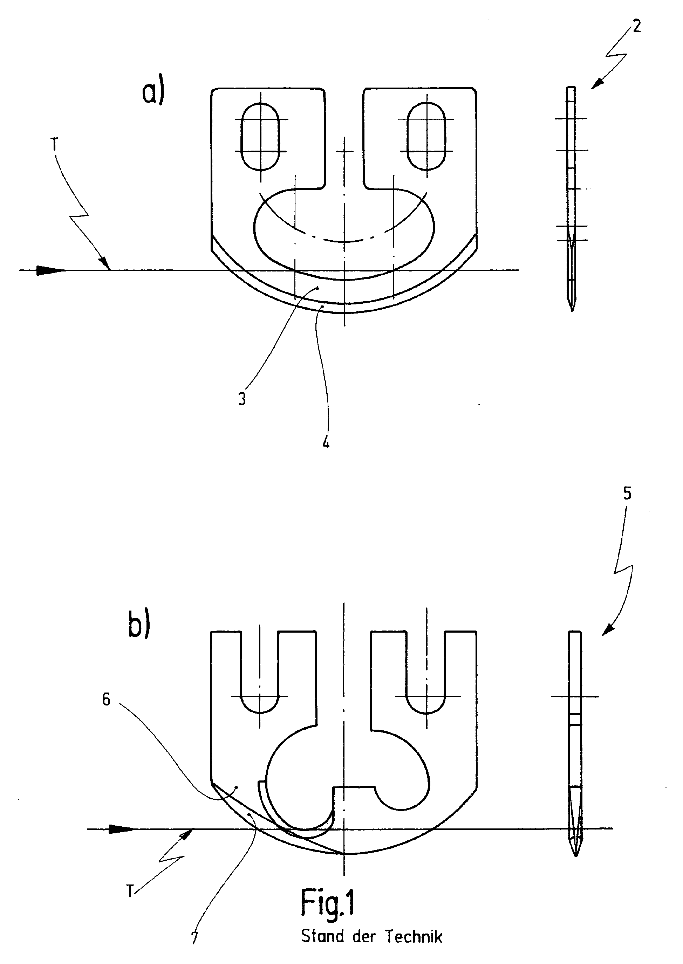

Bei der Weiterentwicklung der widerstandsbeheizten Trennschweißmesser hat man sich dabei im Laufe der Zeit in erster Linie auf die Formgebung der Trennschweißmesser konzentriert. In Fig. 1 sind zwei Trennschweißmesser des Standes der Technik (2 und 5) gezeigt. Die Fig. 1a) zeigt dabei ein Trennschweißmesser, das einen im Wesentlichen C-förmigen Schneidbügel (3) aufweist. Dieser Schneidbügel ist mittels einer Schneide (4) scharf geschliffen und zerschneidet tatsächlich noch die gegen das Trennschweißmesser geführten Folienbahnen. Die Folienbahnen laufen dabei in etwa in der Ebene T an dem Trennschweißmesser entlang.

Daraufhin ist man häufiger zu asymmetrisch aufgebauten Trennschweißmessern übergegangen, wie eines beispielhaft in der Fig. 1b) dargestellt ist. Eine der Folientransportrichtung abgewandte Seite des Trennschweißmessers ist nicht mehr scharf geschliffen, so dass sich der Schneidbügel (6) lediglich auf die in Richtung der zugeführten Folie weisende Seite des Trennschweißmessers beschränkt. Entsprechend befindet sich auch nur auf dieser Seite eine gerade Schneide (7), auf die die Folie in der Transportebene T aufläuft. Aufgrund der asymmetrischen Formgebung erwärmt sich bei der Widerstandsbeheizung insbesondere der Schneidbügel (6), so dass sich dort eine große Hitze einstellt. In diesem Bereich erhitzt sich das Trennschweißmesser in der Regel so weit, dass es rot glüht. Der Schweißvorgang geht unter Umständen mit einer entsprechenden Dampf- und Geruchsentwicklung einher, was allgemein als unangenehm empfunden wird. Des Weiteren führt ein derartig starkes Erhitzen zu schneller Materialermüdung, so dass ein regelmäßiges Austauschen des Trennschweißmessers erforderlich ist.

Um ein verbessertes Schweißergebnis zu erzielen, ging man bei dem eingangs genannten Trennschweißmesser der Druckschrift DE 20 2007 007 298 U1 dazu über, einen Wärmekörper vorzusehen, der zentral in dem Trennschweißmesser vorgesehen ist und mittels eines Stegs mit dem Schneidbügel verbunden ist. Der Wärmekörper dient dazu, Wärme zu speichern und diese während eines Anfahrens und eines Herunterfahrens der Folienverpackungsmaschine an den Schneidbügel abzugeben. Auf diese Weise kann erreicht werden, dass der Schneidbügel in seinem unteren Bereich durch die von der vorbeilaufenden Folie entnommene Wärme nicht zu stark abkühlt. Dadurch kann ein qualitativ hochwertigeres Schweißergebnis erzielt werden. Des Weiteren ist das Trennschweißmesser wiederum symmetrisch ausgebildet, so dass sich auch auf der der Folienzuführung abgewandten Seite des Trennschweißmessers ein zweiter Bereich relativ hoher Temperatur ergibt. Ein derartiges Trennschweißmesser weist zwei Glühbereiche, etwa in einer 4-Uhr-Position und in einer 8-Uhr-Position, auf. Der Strecke der die Verschweißung der Folienbahn bewirkenden Wärmeübertragung kann so verlängert und das Schweißergebnis verbessert werden.

Generell ist man aber immer noch bemüht, die Strecke der Wärmeübertragung zu vergrößern. Je länger die Strecke der Wärmeübertragung gestaltet werden kann, desto geringer muss die Temperatur des Trennschweißmessers sein, um eine Verschweißung zu bewirken. Idealerweise hat man eine sehr lange Wärmeübertragungsstrecke und eine Temperatur, die nur wenig über der zur Verschweißung notwendigen Schmelztemperatur der Folie liegt. Je kürzer die Strecke der Wärmeübertragung ist, desto heißer muss das Trennschweißmesser sein. Um die Belastung des Trennschweißmessers möglichst gering zu halten, soll es insbesondere erreicht werden, die notwendige Temperatur des Trennschweißmessers so weit herabzusetzen, dass es während des Betriebs nicht mehr glüht.

Es ist daher eine technische Aufgabe der vorliegenden Erfindung, ein Trennschweißmesser mit verbesserten Wärmeübertragungseigenschaften bereitzustellen.

Gemäß einem ersten Aspekt wird dazu ein Trennschweißmesser der eingangs genannten Art vorgeschlagen, bei dem der gerade Abschnitt und die zwei gebogenen Abschnitte derart ausgebildet sind, dass ihre jeweiligen Leiterquerschnitte gleich groß sind. Insbesondere kann dabei vorgesehen sein, dass der gerade Abschnitt und die zwei gebogenen Abschnitte entlang dem Schneidbügel parallel zueinander angeordnet sind. Insbesondere sind die zwei gebogenen Abschnitte und der gerade Abschnitte somit parallel zu einer Transportrichtung der Folienbereiche entlang dem Trennschweißmesser und bezüglich der Transportrichtung hintereinander angeordnet. Insbesondere ist dabei bezüglich der Transportrichtung der gerade Abschnitt hinter einem der zwei gebogenen Abschnitte angeordnet und der andere gebogene Abschnitt der zwei gebogenen Abschnitte hinter dem geraden Abschnitt angeordnet.

In Versuchen hat sich herausgestellt, dass der auf den Schneidbügel beaufschlagte Schliff nicht mehr unmittelbar die Durchtrennung der Folienbahnen bewirkt. Zwar sollte das Trennschweißmesser in Richtung der auflaufenden Folienbahnen noch keilförmig ausgestaltet sein, um ein Auseinanderlaufen der durchtrennten Folienbahnen zu bewirken, es ist jedoch nicht notwendig, dass die Schneide tatsächlich scharf ist, um durch die Schärfe einen sauberen Schnitt durch die Folienbahn zu bewirken. Aufgrund der Hitze der Schneide schmelzen die auf die Schneide auflaufenden Folienbereiche vielmehr in der Regel bereits, bevor sie die Schneide berühren.

Unter "Folienbereiche" sind dabei die aufeinanderliegenden Abschnitte zu verstehen, die verschweißt werden sollen. Dabei kann es sich sowohl um Abschnitte verschiedener Folienbahnen als auch um Abschnitte eines einzigen Halbschlauchs handeln, die miteinander verschweißt werden.

Es wurde festgestellt, dass der auf den Schneidbügel aufgebrachte Schliff nicht eine Durchtrennung der Folienbahnen bewirkt, sondern vielmehr beeinflusst, in welchem Bereich des Schneidbügels sich eine hohe Temperatur einstellt. Dort nämlich, wo durch den Schliff am meisten Material von dem Schneidbügel abgenommen wird, weist der Schneidbügel einen geringen Querschnitt und folglich einen höheren Ohmschen Widerstand auf. Infolgedessen stellt sich an diesen Stellen auch die höchste Temperatur in dem Schneidbügel ein und gerade in diesen Bereichen erfolgt ein Verglühen und Verschmelzen der Folie.

Infolge dieser Erkenntnis ist es somit möglich, den Schneidbügel derart zu gestalten, dass der Leiterquerschnitt sowohl in dem geraden Abschnitt als auch in den beiden gebogenen Abschnitten gleich ist. Folglich stellen sich in diesen Abschnitten der gleiche Ohmsche Widerstand und eine gleichmäßige Temperaturverteilung ein. Die Strecke der Wärmeübertragung von dem Schneidbügel auf die Folie ist folglich wesentlich verlängert. Somit reduziert sich die notwendige Temperatur, auf die der Schneidbügel erwärmt werden muss.

Mittels des so beschriebenen Vorgehens ist es gelungen, die Strecke der Wärmeübertragung von einer Länge von etwa 3 mm in jedem gebogenen Abschnitt auf etwa 9 mm in jedem gebogenem Abschnitt zu verlängern. Infolgedessen konnte die in diesen Abschnitten vorherrschende Temperatur des Schneidbügels von etwa 500°C, bei der der Schneidbügel rotglühend ist, auf ungefähr 300°C, bei der der Schneidbügel seine Anlassfarbe annimmt, herabgesetzt werden.

Das Material des Trennschweißmessers wird folglich nicht mehr in so hohem Maße wie bisher beansprucht und auch die mit dem glühenden Trennschweißmesser einhergehenden Nebeneffekte wie Dampf- und Geruchsentwicklung treten nicht mehr auf.

Gemäß einem weiteren Aspekt der Erfindung wird eine Längstrennschweißvorrichtung mit einem Trennschweißmesser gemäß dem ersten Aspekt vorgeschlagen, das eine Folienführung aufweist, die die aufeinanderliegenden Folienbereiche unterhalb des Wärmekörpers an dem Trennschweißmesser entlangführt. Insbesondere kann dabei vorgesehen sein, dass die Folienführung derart ausgebildet ist, dass sie die Folienbereiche in einer Transportrichtung an dem Trennschweißmesser entlangführt. Insbesondere ist das Trennschweißmesser dabei parallel zu der Transportrichtung in der Längstrennschweißvorrichtung ausgerichtet bzw. angeordnet. Insbesondere sind somit der gerade Abschnitt und die gebogenen Abschnitte parallel zu der Transportrichtung ausgerichtet bzw. angeordnet.

Bei bisherigen Längstrennschweißvorrichtungen konnte es passieren, dass die durchtrennte Folie gegen die Kante des Wärmekörpers schlägt und sich dadurch Schädigungen des Randes der zu verschweißenden Folienbereiche ergeben haben. Diese konnten wiederum eine undichte oder qualitativ minderwertige Schweißnaht zur Folge haben.

Daher ist man bemüht, die Folie so tief wie möglich, d.h. unterhalb des Wärmekörpers, an dem Trennschweißmesser vorbeizuführen. Bisher war jedoch die Schweißstrecke in diesem Bereich zu kurz, um eine vernünftige Verschweißung der Folienbereiche zu ermöglichen. Durch das neuartige Trennschweißmesser wird es nunmehr möglich, die Folie unterhalb des Wärmekörpers an einem Trennschweißmesser entlang zu führen und gleichzeitig eine ausreichende Schweißstrecke bereitzustellen.

Der Wärmekörper dient in erster Linie als Energiespeicher, um zu vermeiden, dass die Schneidklinge durch zu große Wärmeabgabe an die zu verschweißenden Folienbereiche zu schnell auskühlt, was zu einer qualitativ minderwertigen Schweißnaht führt, die sich gegebenenfalls ungewollt öffnet. Kritisch kann ein derartiges Auskühlen insbesondere während des Anfahrens bzw. Herunterfahrens der Folienverpackungsmaschine werden, wenn die Transportgeschwindigkeit der Folie unter Umständen nicht mehr optimal mit der Temperatur des Trennschweißmessers übereinstimmt. Ist die Transportgeschwindigkeit der zu verschweißenden Folienbereiche zu hoch, kühlt der Schneidbügel zu früh ab, so dass nicht genügend Wärme in die Folienbereiche eingebracht werden kann, um ein gewünschtes Verschmelzen zu erreichen. Daher kann ein Wärmekörper vorgesehen werden, um in diesem Fall eine ausreichende Menge an Energie zu speichern, die dazu dient, den Schneidbügel auf einer ausreichend hohen Temperatur zu halten. Dies erleichtert die Regelung der Temperatur des Trennschweißmessers bei gleichbleibend guten Schweißergebnissen.

Die eingangs gestellte Aufgabe wird daher vollkommen gelöst.

In einer Ausführungsform kann vorgesehen sein, dass der Schneidbügel U-förmig ausgebildet ist.

Die U-förmige Form des Schneidbügels ermöglicht gegenüber der bisherigen C-förmigen Form eine deutliche Verlängerung der Schweißstrecke und dadurch eine verbesserte Herabsetzung der Temperatur des Schneidbügels.

Dabei kann insbesondere vorgesehen sein, dass der Schneidbügel zwei Schenkelabschnitte aufweist, wobei die Schenkelabschnitte jeweils einen der gebogenen Abschnitte mit einem der Anschlussabschnitte verbinden.

Auf diese Weise wird die U-förmige Ausbildung des Schneidbügels unterstützt und die Ausbildung der gebogenen Abschnitte mit kleinerem Radius ermöglicht. Durch die so verlängerten Schweißstrecken und herabgesetzten Schneidbügeltemperaturen ergeben sich bessere Regelungsmöglichkeiten der Temperatur des Schneidbügels. Aufgrund der bisherigen verkürzten Schweißstrecke unterlag die Temperatur in diesem Bereich einer sehr hohen Dynamik. Bereits kleinste Änderungen einer angelegten Spannung konnten eine wesentliche Temperaturerhöhung hervorrufen, die eine Beschädigung des Trennschweißmessers bewirken konnte. Durch das verbesserte Trennschweißmesser ergeben sich bessere Regelungsmöglichkeiten, da zwischen der Temperatur eines einzelnen Bereichs des Trennschweißmessers und der angelegten Spannung kein derart sensibler Zusammenhang mehr besteht.

Des Weiteren kann vorgesehen sein, dass der Wärmekörper eine dem geraden Abschnitt zugewandte Unterseite aufweist und ein Übergang von einem jeweiligen der Schenkelabschnitte auf einen entsprechenden gebogenen Abschnitt etwa auf Höhe der Unterkante liegt.

Auf diese Weise und im Zusammenhang mit einem möglichst kleinen Radius der gebogenen Abschnitte wird eine besonders ausgeprägte U-Form des Schneidbügels erzielt. Bei gleichbleibendem Leiterquerschnitt kann es so ermöglicht werden, eine relativ lange Schweißstrecke bereitzustellen, womit, wie bereits voranstehend erwähnt, die Temperatur des Trennschweißmessers nur wenig oberhalb der Schmelztemperatur der zu verschweißenden Folienbereiche liegen muss.

Insbesondere kann vorgesehen sein, dass die gebogenen Abschnitte jeweils einen Radius von 4 bis 10 mm, insbesondere 6 mm aufweisen.

Dieser geringe Radius ermöglicht insbesondere die U-förmige Form des Trennschweißmessers und eine verlängerte Schweißstrecke.

Bei der Längstrennschweißvorrichtung gemäß dem zweiten Aspekt kann des Weiteren vorgesehen sein, dass die Folienführung die aufeinanderfolgenden Folienbereiche über eine gesamte Länge des geraden Abschnitts an dem geraden Abschnitt entlang führt.

Auf diese Weise wird die Schweißstrecke maximiert und die notwendige Temperatur in dem Trennschweißmesser minimiert. Auf diese Weise ist man in der Lage, sich noch weiter dem Optimalverhältnis von Schweißtemperatur und Schweißstrecke anzunähern.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: zwei Ausführungsformen von Trennschweißmessern des Standes der Technik,
- Fig. 2: eine schematische Ansicht einer Folienverpackungsmaschine,
- Fig. 3: eine Seitenansicht einer Ausführungsform einer Längstrennschweißvorrichtung, und
- Fig. 4: eine Ausführungsform eines erfindungsgemäßen Trennschweißmessers.

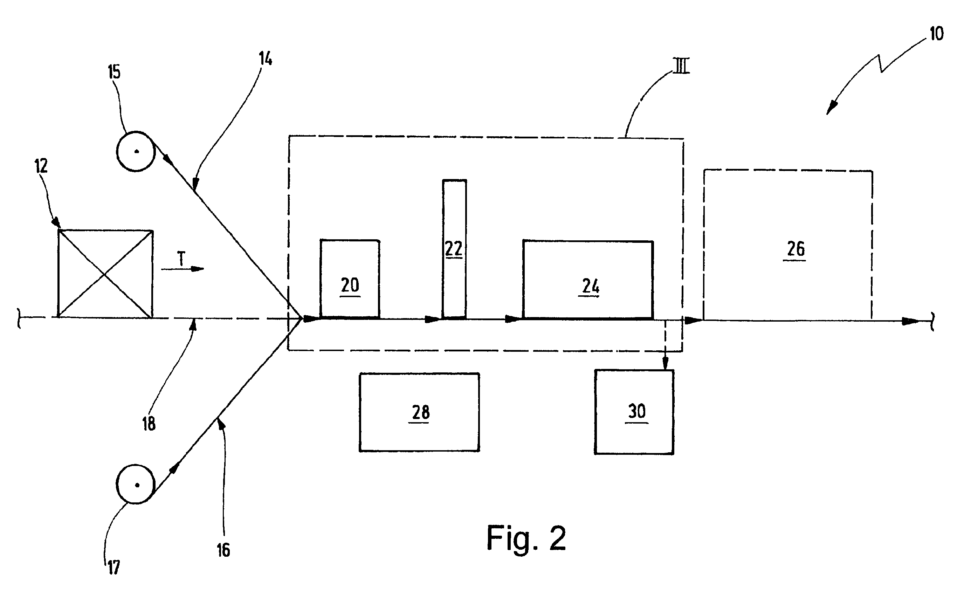

Fig. 2 zeigt eine Folienverpackungsmaschine 10 in einer schematischen Ansicht. Die Folienverpackungsmaschine 10 dient dazu, ein Packgut 12 mit einer Umverpackung zu versehen. Dazu wird das Packgut 12 in einer Transportrichtung T durch die Folienverpackungsmaschine 10 bewegt.

Das Packgut 12 wird von der Folienverpackungsmaschine 10 mit einer oberen Folienbahn 14, die von einer oberen Folienzuführung 15 abgewickelt wird, und einer unteren Folienbahn 16, die von einer unteren Folienzuführung 17 abgewickelt wird, eingehüllt. Diese Art der Einhellung entspricht dem Prinzip einer sog. Serienpackmaschine, so dass dementsprechend die vorliegende Erfindung am Beispiel einer als Serienpackmaschine ausgestalteten Folienverpackungsmaschine 10 erläutert wird.

Die obere Folienbahn 14 und die untere Folienbahn 16 laufen in einer Folienebene 18 zusammen. Das Packgut 12 fährt somit in die aufeinander zulaufende obere Folienbahn 14 und untere Folienbahn 16 ein, wobei die Folienbahnen 14, 16 zunächst einer Querstraffung unterzogen werden.

Dazu ist eine Querstraffungsvorrichtung 20 vorgesehen. Die mögliche Ausgestaltung dieser Querstraffungsvorrichtung wird mit Blick auf die folgenden Figuren noch näher erläutert. Das umhüllte Packgut 12 mit den quer gestrafften Folienbahnen 14, 16 erreicht dann eine Quertrennschweißvorrichtung 22. Die Quertrennschweißvorrichtung 22 schweißt die Folienbahnen 14, 16 quer zu der Transportrichtung T zusammen und durchtrennt die Folienbahnen 14, 16 zumindest teilweise, so dass das Packgut 12 entlang der Schweißnaht keinen Kontakt mehr zu dem ihm vorhergehenden Packgut hat. Die in Transportrichtung T weisende Seite des Packguts 12 ist somit bereits verschweißt.

Anschließend fährt das Packgut durch ein Längstrennschweißvorrichtung 24, das dazu vorgesehen ist, die Folienbahnen 14, 16 seitlich des Packguts 12 zusammenzuschweißen und einen seitlichen Folienüberstand abzutrennen. Schließlich wird die entgegengesetzt zu der Transportrichtung T weisende Seite des Packguts 12 erneut von der Quertrennschweißvorrichtung 22 verschweißt und abgetrennt. Dieser Vorgang stellt dabei gleichzeitig die Abtrennung und Verschweißung der in die Transportrichtung T weisenden Seite eines nachfolgenden Packguts dar. Das Packgut 12 ist nun an allen vier Seiten verschweißt und beschnitten, so dass das Packgut 12 von einer Folienumhüllung komplett umgeben ist.

Die Abfolge der Quertrennschweißvorrichtung 22, der Längstrennschweißvorrichtung 24 und der Querstraffungsvorrichtung 20 ist lediglich beispielhaft in einer häufig auftretenden Konfiguration wiedergegeben. Die Abfolge dieser Einrichtungen kann auch anders sein, bspw. kann vorgesehen sein, die Quertrennschweißvorrichtung 22 nach der Längstrennschweißvorrichtung 24 anzuordnen. Auch können Elemente der Querstraffungsvorrichtung 20 zwischen oder in der Quertrennschweißvorrichtung 22 oder der Längstrennschweißvorrichtung 24 vorgesehen sein.

In der Regel ist vorgesehen, dass sich dann ein Schrumpftunnel 26 anschließt, der auf eine bestimmte Temperatur erwärmt ist und die Folienbahnen 14, 16 auf das Packgut 12 aufschrumpft, so dass die Folienbahnen 14, 16 das Packgut 12 fest und ohne Spiel umschließen. Der Verpackungsvorgang ist dann abgeschlossen.

Das Vorhandensein eines Schrumpftunnels 26 hängt grundsätzlich von den an die Verpackung gestellten Anforderungen ab. Ein Schrumpftunnel 26 muss insbesondere bei Serienpackmaschinen nicht zwingend vorhanden sein.

Des Weiteren weist die Folienverpackungsmaschine 10 in der Regel Verstelleinrichtungen 28 auf, um die Verpackungsmaschine 10 an Packgüter unterschiedlicher Breite, Länge und Höhe einstellen zu können. Auch die Geschwindigkeit des Verpackungsvorgangs kann mittels der Verstelleinrichtungen 28 eingestellt werden. Des Weiteren sind Möglichkeiten vorgesehen, die Verpackungsmaschine 10 auf unterschiedliche Folientypen, die bspw. in Dicke, Reißfestigkeit und Oberflächenbeschaffenheit unterschiedlich sein können, einzustellen.

Letztlich ist in der Regel eine Folienrückführung 30 vorgesehen, die von der Längstrennschweißvorrichtung 24 abgetrenntes überschüssiges Folienmaterial sammelt, um es bspw. einem Recyclingprozess zuzuführen.

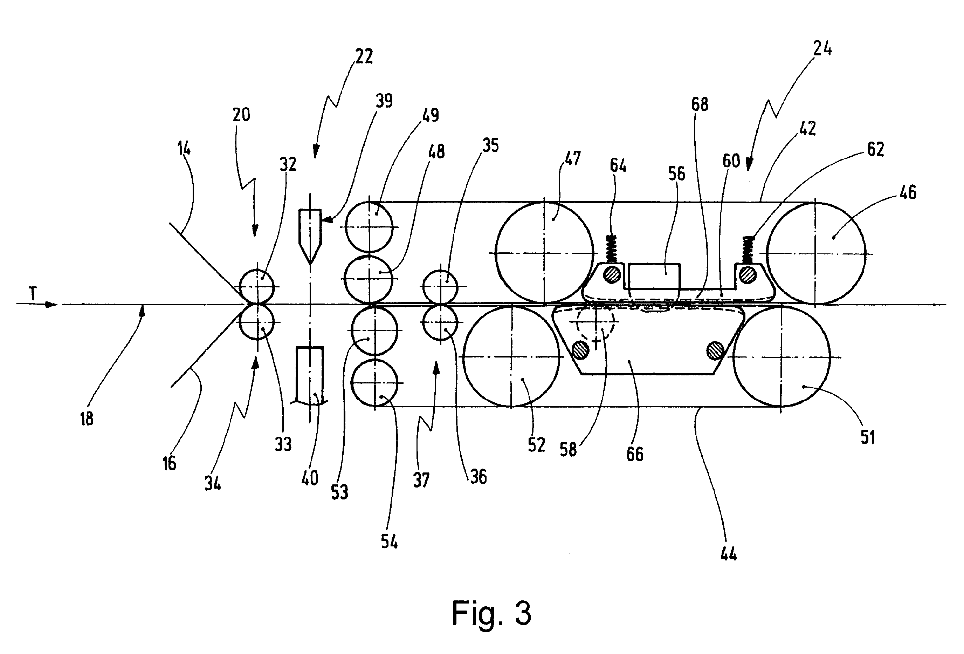

Mit III ist ein Ausschnitt der Folienverpackungsmaschine 10 bezeichnet, der in Fig. 3 in einer Detailansicht dargestellt ist.

Fig. 3 zeigt eine Ausführungsform einer Längstrennschweißvorrichtung 24 in einer Seitenansicht. Die Längstrennschweißvorrichtung 24 ist nach der Quertrennschweißvorrichtung 22 angeordnet. Vor der Quertrennschweißvorrichtung 22 ist die Querstraffungsvorrichtung 20 angeordnet. Die Querstraffungsvorrichtung 20 weist zwei Räder 32, 33 auf, die die Folienbahnen 14, 16 zwischen sich entlang der Folienebene 18 einziehen. Die Räder 32, 33 bilden ein erstes Räderpaar 34. Eine Drehachse der Räder 32, 33 relativ zu der Transportrichtung T kann nach außen gewinkelt sein, so dass eine entsprechende Querstraffung erreicht wird.

Die Räder 32, 33 stellen insbesondere eine optimale Querstraffung für den Quertrennschweißvorgang mittels der Quertrennschweißvorrichtung 22 sicher. Entsprechend ist in der Längstrennschweißvorrichtung 24 ein aus zwei Rädern 35, 36 bestehendes Räderpaar 37 vorgesehen, das dieselbe Funktion wie das erste Räderpaar 34 mit den Rädern 32, 33 erfüllt. Das Räderpaar 37 stellt so eine optimale Querstraffung der Folienbahnen 14, 16 für den Längstrennschweißvorgang bereit.

Der Quertrennschweißvorgang mittels der Quertrennschweißvorrichtung 22 wird von einem Oberstempel 39 und einem Unterstempel 40 bewirkt. Der Oberstempel 39 weist ein Schweißmesser auf, das gegen den Unterstempel 40 gedrückt wird und die Folienbahnen 14, 16 miteinander verschweißt und diese durchtrennt. Dazu werden der Oberstempel 39 und der Unterstempel 40 aufeinanderzubewegt, so dass sie sich im Bereich der Folienebene 18 treffen. Der Schweißvorgang wird in der Regel mittels einer erhitzten Schneidklinge erzielt. Als Alternative zu der Schneidklinge kann auch ein beheizter Draht verwendet werden. Der Draht wird dabei nicht ständig auf einer hohen Temperatur gehalten, sondern nur impulsbeheizt. Der Draht kann sich dann bei geschlossenen Stempeln 39, 40 wieder abkühlen, was zu einem besseren Schweißergebnis führen kann.

Zum Transport und zur Fixierung der Folienbahnen 14, 16 sind in der Längstrennschweißvorrichtung zwei Endlosriemen 42, 44 vorgesehen, die die Folienbahnen 14, 16 in der Folienebene 18 zwischen sich einziehen und klemmen und die Folienbahnen 14, 16 und das Packgut 12 fördern. Jeweils ein Endlosriemen 42, 44 ist somit auf jeder Seite der Folienebene 18 angeordnet.

Der Endlosriemen 42 läuft um drei Rollen 46, 48, 49 um. Der Endlosriemen 44 läuft um drei Rollen 51, 53, 54 um.

Die Laufbahnen der Rollen 46 und 47 sowie 51 und 52 weisen denselben Durchmesser auf. Im Bereich den Endlosriemens 42 weisen die Rollen 47 und 52 jedoch bereits wieder einen geringeren Durchmesser auf, so dass die Endlosriemen 42, 44 nicht über die Rollen 47 und 52 laufen.

An der Stelle, an der die Folienbahnen 14, 16 von den Endlosriemen 42, 44 zwischen sich eingezogen werden, befinden sich die Rollen 48 und 53. Jeweils vertikal versetzt zu den Rollen 48 und 53 sind Rollen 49 bzw. 54 vorgesehen. Die Rollen 48 und 49 bzw. 53 und 54 sind relativ zueinander verschiebbar, bspw. indem die Rollen 49 und 54 in einem sich vertikal erstreckenden Langloch (nicht dargestellt) befestigt sind. Auf diese Weise kann die Spannung der Endlosriemen 42, 44 reguliert werden, insbesondere kann so auch ein leichtes Austauschen der Endlosriemen 42, 44 erreicht werden.

Die Folienbahnen 14, 16 werden entlang der Folienebene 18 von den Endlosriemen 42, 44 gefördert und durch ein Trennschweißmesser 56 geführt. Das Trennschweißmesser 56 ist widerstandsbeheizt, so dass das Schweißmesser 56 die Folienbahnen 14, 16 durchtrennt und an ihrem Ende verschmelzt bzw. verschweißt.

Um dem Trennschweißmesser 56 die Folienbahnen 14, 16 möglichst faltenfrei zuzuführen, ist vor dem Schweißmesser 56 eine Spannrolle 58 vorgesehen, die auf der dem Trennschweißmesser 56 gegenüberliegenden Seite der Folienebene 18 angeordnet ist und diese durchdringt. Durch die Spannrolle 58 werden die Folienbahnen 14, 16 kurzzeitig angehoben und weitestgehend faltenfrei gezogen. Selbst wenn eine Falte nicht durch die Spannrolle 58 entfernt werden könnte, wird so zumindest sichergestellt, dass auch die jeweils andere Folienbahn 14, 16 sich entsprechend in die Falte legt, so dass die Folienbahnen 14, 16 ohne Lufteinschlüsse aufeinanderliegen, wenn sie verschweißt werden.

Des Weiteren ist eine Stützschiene 60 vorgesehen, die dazu vorgesehen ist, die Folienbahnen 14, 16 im Bereich des Schweißmessers 56 fest und glatt aufeinander zu pressen. Die Anpresskraft der Stützschiene 60 wird mittels geeigneter Federelemente 62, 64 erzeugt. Diese drücken die Stützschiene 60 auf eine gegenüberliegende Stützschiene 66.

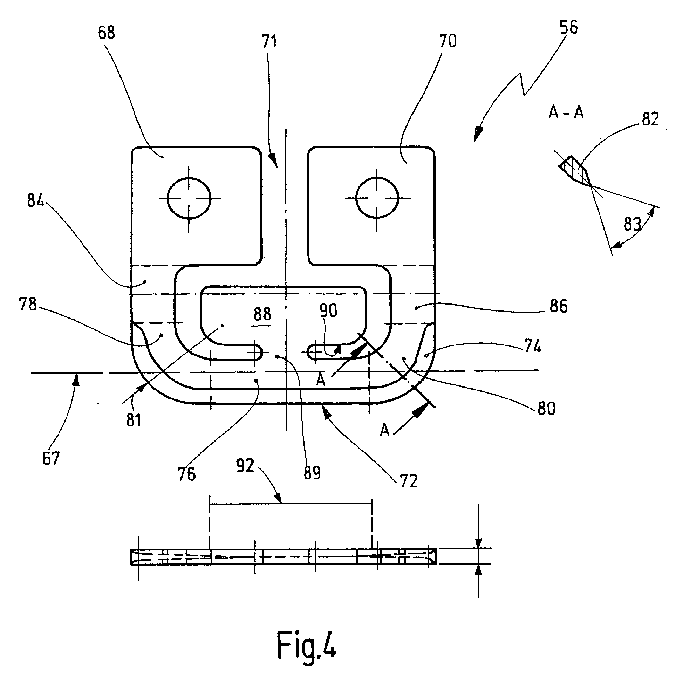

Fig. 4 zeigt eine Ausführungsform eines Trennschweißmessers 56. In der Folienebene 18 werden Folienbereiche 67 an dem Trennschweißmesser 56 vorbeigeführt. Das Trennschweißmesser 56 ist somit parallel zu der Transportrichtung T angeordnet.

Das Trennschweißmesser 56 weist einen ersten Anschlussabschnitt 68 und einen zweiten Anschlussabschnitt 70 auf, die dazu dienen, das Trennschweißmesser 56 zu befestigen und in einen elektrischen Stromkreis einzubinden. Der erste Anschlussabschnitt 68 und der zweite Anschlussabschnitt 70 liegen einander gegenüber und sind durch einen Luftspalt 71 voneinander getrennt, so dass ein Kurzschluss sicher vermieden wird.

Das Trennschweißmesser 56 weist des Weiteren einen Schneidbügel 72 auf, der im Wesentlichen U-förmig ausgebildet ist und den ersten Anschlussabschnitt 68 und den zweiten Anschlussabschnitt 70 miteinander verbindet. Eine an den ersten Anschlussabschnitt 68 und an den zweiten Anschlussabschnitt 70 angelegte Spannung bewirkt somit einen durch den Schneidbügel 72 fließenden Strom.

Der Schneidbügel 72 ist keilförmig geschliffen und weist daher eine Schneide 74 auf. Die Schneide 74 ist nicht notwendigerweise scharf. Die U-förmige Form des Schneidbügels 72 setzt sich aus einem geraden Abschnitt 76 und zwei gebogenen Abschnitten 78 zusammen. Die gebogenen Abschnitte 78 schließen an einander entgegengesetzten Enden an den geraden Abschnitt 76 an. Die gebogenen Abschnitte 78, 80 sind mit einem Radius 81 ausgeführt. Der Radius kann bei beiden gebogenen Abschnitten 78, 80 gleich groß sein. Der gerade Abschnitt 76 und die gebogenen Abschnitte 78, 80 sind somit parallel zu der Transportrichtung T in der Längstrennschweißvorrichtung 24 angeordnet.

Der gerade Abschnitt 76 und die gebogenen Abschnitte 78, 80 weisen einen Querschnitt 82 auf, der in der Schnittansicht A-A der Fig. 2 dargestellt ist. Der Querschnitt 82 ist der Leiterquerschnitt, der den Ohmschen Widerstand des geraden Abschnitts 76 und der gebogenen Abschnitte 78, 80 bestimmt und damit die sich in diesen Abschnitten 76, 78, 80 einstellende Temperatur. In diesem Leiterquerschnitt ist die Schneide 74 mit einem Winkel 83 zulaufend geschliffen, der 40° bis 70°, insbesondere 45° bis 55° und vorzugsweise 54° beträgt.

Der gebogene Abschnitt 78 geht über einen Schenkelabschnitt 84 in den Anschlussabschnitt 68 über. Entsprechend geht auch der gebogene Abschnitt 80 über einen Schenkelabschnitt 86 in den Anschlussabschnitt 70 über. Die Schenkelabschnitte 84, 86 erstrecken sich senkrecht zu dem geraden Abschnitt 76, so dass die gebogenen Abschnitte 78, 80 insgesamt einen Winkelbogen von jeweils 90° überstreichen.

Des Weiteren weist das Trennschweißmesser 56 einen Wärmekörper 88 auf. Der Wärmekörper 88 ist über einen Steg 89 mit dem geraden Abschnitt 76 verbunden.

Der Leiterquerschnitt 82 des geraden Abschnitts 76 und die gebogenen Abschnitte 78, 80 sind im Wesentlichen gleich groß. Dies wird über eine geeignete Ausbildung der Schneide 74 erreicht.

Der Steg 89 ist somit nicht als Teil des geraden Abschnitts 76 zu betrachten. Im Bereich des Übergangs des Stegs 89 auf den geraden Abschnitt 76 ergibt sich natürlich insgesamt ein größerer Leiterquerschnitt, der Steg 89 selbst ist jedoch nicht als Teil des Leiterquerschnitts des geraden Abschnitts 76 zu verstehen. In den Leiterquerschnitt 82 des geraden Abschnitts 76 ist der Steg 89 nicht mit einzubeziehen.

Der Wärmekörper 88 weist eine Unterseite 90 auf. Die Unterseite 90 liegt in etwa auf gleicher Höhe wie ein Übergang von einem der gebogenen Abschnitte 78, 80 auf einem entsprechenden Schenkelabschnitt 84, 86. Bereiche gleichmäßiger Temperatur liegen in etwa zwischen dem Übergang des Schenkelabschnitts 84 zu dem gebogenen Abschnitt 78 bis zu dem Beginn des Stegs 89 und von dem Ende des Stegs 89 bis zu dem Übergang von dem gebogenen Abschnitt 80 auf den Schenkelabschnitt 86 vor. Entsprechend ist die Längstrennschweißvorrichtung 24 derart ausgebildet, dass die Folienbereiche 67 unterhalb der Unterseite 90 in einem oberen Bereich des geraden Abschnitts 76 verlaufen.

Auf diese Weise wird nicht nur vermieden, dass die Folienbereiche 67 sich an einer Kante des Stegs 89 verhaken und dadurch einreißen, sondern auch die Schweißstrecke deutlich verlängert. Insbesondere sind die Folienbereiche 67 in der Längstrennschweißvorrichtung 24 derart angeordnet, dass sie sich über eine gesamte Länge 92 des geraden Abschnitts 76 erstrecken. Auf diese Weise kann die Schweißstrecke maximiert werden, indem sich die Folienbereiche 67 möglichst weit über die gebogenen Abschnitte 78, 80 und den geraden Abschnitt 76 erstrecken, in denen die Schweißtemperatur vorliegt. Auf diese Weise wird der Wärmetransport von dem Trennschweißmesser 56 auf die Folienbereiche 67 maximiert. Durch die verlängerten Schweißstrecken kann die Temperatur in den gebogenen Abschnitten 78, 80 und dem geraden Abschnitt 76 minimiert werden, um ein Schweißergebnis von gleichbleibender Qualität zu erreichen und das Material des Schneidbügels 72 zu schonen.

## Patentansprüche

1. Trennschweißmesser (56) zum Trennschweißen von aufeinanderliegenden Folienbereichen (67), mit zwei Anschlussabschnitten (68, 70) zum Widerstandsbeheizen des Trennschweißmessers (56), und mit einem Schneidbügel (72), der die Anschlussabschnitte (68, 70) miteinander verbindet und einen geraden Abschnitt (76) sowie zwei gebogene Abschnitte (78, 80) aufweist, wobei des Weiteren ein mit dem geraden Abschnitt (76) verbundener Wärmekörper (88) vorgesehen ist, **dadurch gekennzeichnet, dass** der gerade Abschnitt (76) und die zwei gebogenen Abschnitte (78, 80) derart ausgebildet sind, dass ihre jeweiligen Leiterquerschnitte (82) gleich groß sind.

2. Trennschweißmesser nach Anspruch 1, **dadurch gekennzeichnet, dass** der Schneidbügel (72) U-förmig ausgebildet ist.

3. Trennschweißmesser nach Anspruch 2, **dadurch gekennzeichnet, dass** der Schneidbügel zwei Schenkelabschnitte (84, 86) aufweist, wobei die Schenkelabschnitte (84, 86) jeweils einen der gebogenen Abschnitte (78, 80) mit einem der Anschlussabschnitte (68, 70) verbinden.

4. Trennschweißmesser nach einem der Ansprüche 1 bis 3, **dadurch gekennzeichnet, dass** der Wärmekörper (88) eine dem geraden Abschnitt (76) zugewandte Unterseite (90) aufweist und ein Übergang von einem jeweiligen der Schenkelabschnitte (84, 86) auf einen entsprechenden gebogenen Abschnitt (78, 80) etwa auf Höhe der Unterkante (90) liegt.

5. Trennschweißmesser nach einem der Ansprüche 1 bis 4, **dadurch gekennzeichnet, dass** die gebogenen Abschnitte (78, 80) jeweils einen Außenradius von 4 bis 10 mm, insbesondere 6 mm aufweisen.

6. Längstrennschweißvorrichtung (24), **gekennzeichnet durch** ein Trennschweißmesser (56) nach einem der Ansprüche 1 bis 5, wobei des Weiteren eine Folienführung (42, 44, 46 - 49, 51 - 54) vorgesehen ist, die die aufeinanderliegenden Folienbereiche (67) unterhalb der Wärmekörpers (88) an dem Trennschweißmesser (56) entlang führt.

7. Längstrennschweißvorrichtung nach Anspruch 6, **dadurch gekennzeichnet, dass** die Folienführung (42, 44, 46 - 49, 51 - 54) die aufeinanderliegenden Folienbereiche (67) über eine gesamte Länge (92) des geraden Abschnitts (76) an dem geraden Abschnitt (76) entlang führt.

## Claims

1. Cutting and sealing blade (56) for cutting and sealing film regions (67) lying one on top of another, having two contact sections (68, 70) for resistance heating the cutting and sealing blade (56), and having a cutting bow (72) which connects the contact sections (68, 70) together and has a straight section (76) and two curved sections (78, 80), wherein furthermore a heat body (88) connected to the straight section (76) is provided, **characterized in that** the straight section (76) and the two curved sections (78, 80) are formed such that conductor cross sections (82) thereof are the same size.

2. Cutting and sealing blade according to Claim 1, **characterized in that** the cutting bow (72) is formed in a U-shaped manner.

3. Cutting and sealing blade according to Claim 2, **characterized in that** the cutting bow has two limb sections (84, 86), wherein the limb sections (84, 86) each connect one of the curved sections (78, 80) to one of the contact sections (68, 70).

4. Cutting and sealing blade according to one of Claims 1 to 3, **characterized in that** the heat body (88) has an underside (90) facing the straight section (76) and a transition from in each case one of the limb sections (84, 86) to a corresponding curved section (78, 80) is located approximately at the level of the lower edge (90).

5. Cutting and sealing blade according to one of Claims 1 to 4, **characterized in that** the curved sections (78, 80) each have an outside radius of 4 to 10 mm, in particular 6 mm.

6. Longitudinal cutting and sealing apparatus (24), **characterized by** a cutting and sealing blade (56) according to one of Claims 1 to 5, wherein there is furthermore provided a film guide (42, 44, 46-49, 51-54) which guides the film regions (67) lying one on top of another along the cutting and sealing blade (56) underneath the heat body (88).

7. Longitudinal cutting and sealing apparatus according to Claim 6, **characterized in that** the film guide (42, 44, 46-49, 51-54) guides the film regions (67) lying one on top of another along the straight section (76) over the entire length (92) of the straight section (76).

## Revendications

1. Couteau de soudage et de séparation (56) pour le soudage avec séparation de régions de feuille superposées (67), avec deux parties de raccordement (68, 70) pour le chauffage par résistance du couteau de soudage et de séparation (56), et avec un arceau de coupe (72), qui relie l'une à l'autre les parties de raccordement (68, 70) et qui présente une partie droite (76) ainsi que deux parties courbes (78, 80), dans lequel il est en outre prévu un corps chauffant (88) relié à la partie droite (76), **caractérisé en ce que** la partie droite (76) et les deux parties courbes (78, 80) sont configurées de telle manière que leurs sections transversales respectives (82) soient de grandeur égale.

2. Couteau de soudage et de séparation selon la revendication 1, **caractérisé en ce que** l'arceau de coupe (72) est réalisé en forme de U.

3. Couteau de soudage et de séparation selon la revendication 2, **caractérisé en ce que** l'arceau de coupe présente deux parties de branche (84, 86), dans lequel les parties de branche (84, 86) relient respectivement une des parties courbes (78, 80) à une des parties de raccordement (68, 70).

4. Couteau de soudage et de séparation selon l'une quelconque des revendications 1 à 3, **caractérisé en ce que** le corps chauffant (88) présente un côté inférieur (90) tourné vers la partie droite (76) et une transition d'une respective des parties de branche (84, 86) à une partie courbe correspondante (78, 80) est située environ à hauteur de l'arête inférieure (90).

5. Couteau de soudage et de séparation selon l'une quelconque des revendications 1 à 4, **caractérisé en ce que** les parties courbes (78, 80) présentent chacune un rayon extérieur de 4 à 10 mm, en particulier de 6 mm.

6. Dispositif de soudage et de séparation en longueur (24), **caractérisé par** un couteau de soudage et de séparation (56) selon l'une quelconque des revendications 1 à 5, dans lequel il est en outre prévu un guidage de feuille (42, 44, 46-49, 51-54), qui guide les régions de feuille superposées (67) en dessous du corps chauffant (88) le long du couteau de soudage et de séparation (56).

7. Dispositif de soudage et de séparation en longueur selon la revendication 6, **caractérisé en ce que** le guidage de feuille (42, 44, 46-49, 51-54) guide les régions de feuille superposées (67) sur une longueur totale (92) de la partie droite (76) le long de la partie droite (76).
